# EUROPEAN PATENT APPLICATION

(11) **EP 4 675 836 A1**
(43) Date of publication of application: **07.01.2026**
(21) Application number: 25186808.9
(22) Date of filing: 01.07.2025
(51) Int. Cl.: H01M 50/528, H01M 50/531, H01M 50/533, H01M 10/613

(54) **BATTERY CELL AND BATTERY MODULE INCLUDING THE SAME**

(30) Priority: 01.07.2024 KR 20240086383; 07.04.2025 KR 20250044826
(71) Applicant: SK On Co., Ltd., Seoul 03161 (KR)
(72) Inventor: KWAK, Seung Ho, 34124 Daejeon (KR)
(74) Representative: Stolmár & Partner Patentanwälte PartG mbB

(57) **Abstract**

Provided are a battery cell and a battery module. The battery cell includes a cell assembly including at least one electrode assembly and a current collecting assembly disposed on at least one side of the cell assembly and including a first current collecting portion electrically connected to an electrode tab of the electrode assembly, wherein the first current collecting portion is formed stepwise and contacts the electrode tab on a first surface facing the cell assembly.

## Description

### TECHNICAL FIELD

The disclosure and implementations disclosed in this patent document generally relate to a battery cell and a battery module including the same.

### BACKGROUND

Secondary batteries, unlike primary batteries, have the convenience of being able to be charged and discharged, and have thus have come to prominence as a power source for various mobile devices and electric vehicles. Secondary batteries, unlike primary batteries, may be charged with and discharged of electricity and may be applied to devices within various fields, such as digital cameras, mobile phones, laptops, hybrid vehicles, electric vehicles, and energy storage systems (ESS).

Such secondary batteries may include a battery cell in which an electrode assembly formed by stacking a positive electrode plate, a negative electrode plate, and a separator or by winding them in a roll shape is accommodated inside a case. A plurality of battery cells may be stacked in a predetermined direction and accommodated in a battery module or battery pack. Meanwhile, secondary batteries may include a current collector member electrically connecting an electrode assembly to a terminal. The current collector member may serve as a passage through which current flows.

Here, if deformation occurs, such as distortion of the current collector member, problems, such as increased electrical resistance, heat generation, or short circuits may occur.

Therefore, research into a structure to prevent deformation of the current collector member of secondary batteries is necessary.

### SUMMARY

According to an aspect of the present disclosure, structural rigidity of a current collecting portion may be increased.

According to an aspect of the present disclosure, deformation of a current collecting portion may be minimized or prevented.

According to an aspect of the present disclosure, heat generated by a current collecting portion may be rapidly dissipated.

A battery cell and battery module of the present disclosure may be widely applied to electric vehicle, battery charging station, and green technology fields, such as solar power generation and wind power generation using batteries. In addition, the battery cell and battery module of the present disclosure may be used in eco-friendly electric vehicles, hybrid vehicles, etc. to ameliorate the effects of climate change by suppressing air pollution and greenhouse gas emissions.

In some embodiments of the present disclosure, a battery cell includes: a cell assembly including at least one electrode assembly; and a current collecting assembly disposed on at least one side of the cell assembly and including a first current collecting portion electrically connected to an electrode tab of the electrode assembly, wherein the first current collecting portion is formed stepwise and contacts the electrode tab on a first surface facing the cell assembly.

The first current collecting portion may include: a plurality of contact portions contacting the electrode tab; and a connecting portion disposed between the plurality of contact portions and protruding outwardly, as compared to the contact portions.

The connecting portion may be spaced apart from the electrode assembly, and a gap (a heat dissipation space) for heat dissipation may be formed between the electrode assembly and the connecting portion.

The current collecting assembly may further include a second current collecting portion electrically connected to the first current collecting portion, and
the second current collecting portion may include: a first plate connected to the first current collecting portion; and a second plate bent from the first plate in a predetermined direction.

The first plate may include a first surface facing the cell assembly, and a first surface of the contact portion, which may be a surface in which the contact portion contacts the electrode tab, may be disposed closer to the cell assembly than the first surface of the first plate.

The battery cell may further include: a welded portion formed by welding the electrode tab and the first current collecting portion, wherein the welded portion may be disposed on a second surface opposite to the first surface of the first current collecting portion.

The connecting portion may extend in a first direction, and the plurality of contact portions may be arranged to face each other in a second direction, perpendicular to the first direction, with the connecting portion interposed therebetween.

The electrode assembly may include a first electrode assembly disposed on one side in the first direction and having a first electrode tab and a second electrode assembly disposed on the other side in the first direction and having a second electrode tab, the first electrode tab may be bent toward the second electrode assembly, and the second electrode tab may be bent toward the first electrode assembly.

The first electrode tab may be in contact with one side of the first current collecting portion in the first direction, and the second electrode tab may be in contact with the other side in the first current collecting portion.

A length of at least one of the first electrode tab or the second electrode tab in a second direction may be 50% or more of a length of the electrode assembly in the second direction.

The connecting portion may include a cross-shape.

The connecting portion may include a first connecting portion extending in a first direction and a second connecting portion extending in a second direction, perpendicular to the first direction.

The electrode assembly may include: a first electrode assembly disposed on one side in the first direction and including a plurality of first electrode tabs; and a second electrode assembly disposed on the other side in the first direction and including a plurality of second electrode tabs, and the contact portion may include a first contact portion contacting the plurality of first electrode tabs and a second contact portion contacting the plurality of second electrode tabs.

The first connecting portion may extend in the first direction between the plurality of first electrode tabs and the plurality of second electrode tabs, and the second connecting portion may extend in the second direction between the first contact portion and the second contact portion.

The connecting portion may include at least one of an L-shape or a Z-shape.

The connecting portion may include: a first connecting portion extending in a first direction; and a second connecting portion extending in a second direction, perpendicular to the first direction, from at least one side of the first direction.

The electrode assembly may include a first electrode assembly disposed on one side in the first direction and having a first electrode tab and a second electrode assembly disposed on the other side in the first direction and having a second electrode tab, wherein the first electrode tab may be disposed on one side in the second direction, perpendicular to the first direction, and the second electrode tab may be disposed on the other side in the second direction.

The current collecting portion may include a first contact portion contacting the first electrode tab and a second contact portion contacting the second electrode tab, and the connecting portion may include: a first connecting portion extending in the first direction between the first contact portion and the second contact portion; and a second connecting portion extending in the second direction from at least one of one side of the first contact portion or one side of the second contact portion.

A length of at least one of the first electrode tab or the second electrode tab in the second direction may be 25% or more and 50% or less of a length of the electrode assembly in the second direction.

In some embodiments of the present disclosure, a battery module includes: at least one battery cell; and a module case accommodating the at least one battery cell, wherein the at least one battery cell includes: a cell assembly including at least one electrode assembly; and a current collecting assembly disposed on at least one side of the cell assembly and including a first contact portion electrically connected to an electrode tab of the electrode assembly, wherein the first contact portion may be formed stepwise and contacts the electrode tab on a first surface facing the cell assembly.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell of the present disclosure;
FIG. 2 is an exploded view of a cap assembly of the present disclosure;
FIG. 3 is an exploded view of a battery cell according to a first embodiment of the present disclosure;
FIG. 4 is a perspective view of an electrode assembly and a current collecting assembly according to the first embodiment of the present disclosure;
FIG. 5 is a diagram of a current collecting assembly according to the first embodiment of the present disclosure;
FIG. 6 is a cross-sectional view taken along line da1-da1' of FIG. 5;
FIG. 7 is a cross-sectional view taken along line da2-da2' of FIG. 5;
FIG. 8 is an exploded view of a battery cell according to a second embodiment of the present disclosure;
FIG. 9 is a perspective view of an electrode assembly and a current collecting assembly according to the second embodiment of the present disclosure;
FIG. 10 is a diagram of a current collecting assembly according to the second embodiment of the present disclosure;
FIG. 11 is a cross-sectional view taken along line db1-db1' of FIG. 10;
FIG. 12 is a cross-sectional view taken along line db2-db2' of FIG. 10;
FIG. 13 is an exploded view of a battery cell according to a third embodiment of the present disclosure;
FIG. 14 is a perspective view of an electrode assembly and a current collecting assembly according to the third embodiment of the present disclosure;
FIG. 15 is a diagram of a current collecting assembly according to the third embodiment of the present disclosure;
FIG. 16 is a cross-sectional view taken along line dc1-dc1' of FIG. 15;
FIG. 17 is a cross-sectional view taken along line dc2-dc2' of FIG. 15;
FIG. 18 is a cross-sectional view taken along line dc3-dc3' of FIG. 15; and
FIG. 19 is an exploded view of a battery module according to an embodiment of the present disclosure.

### DETAILED DESCRIPTION

Hereinafter, the present disclosure will be described in detail with reference to the drawings.

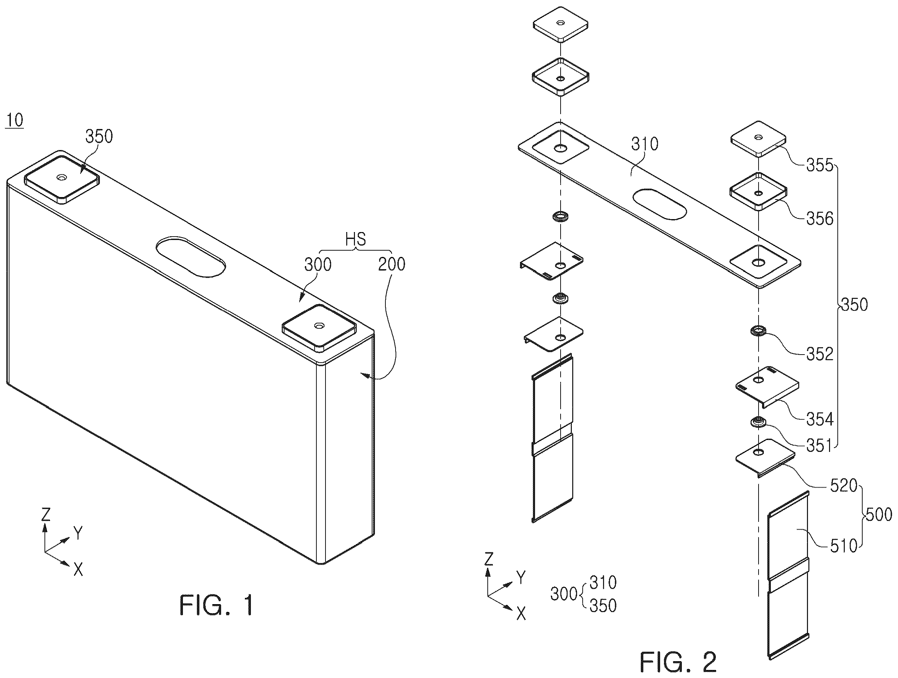

FIG. 1 is a perspective view of a secondary battery according to a first embodiment of the present disclosure, and FIG. 2 is an exploded view of a cap assembly according to a second embodiment of the present disclosure.

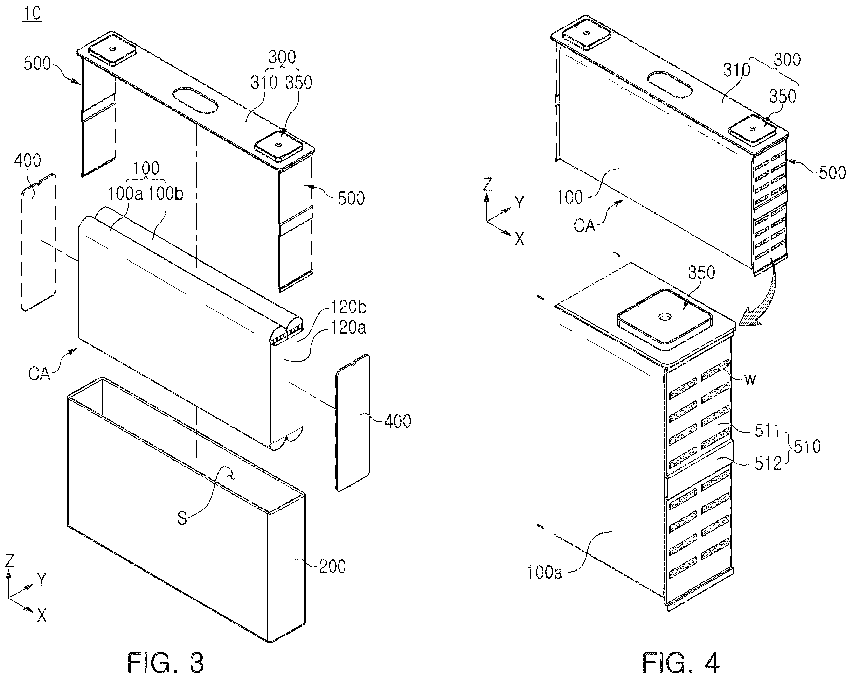

Referring to FIGS. 1 and 2 together, a battery cell of the present disclosure may include a housing HS accommodating a cell assembly CA (see FIG. 3) and having a terminal portion 350.

The housing HS may include the can 200 having an accommodating space S accommodating the cell assembly CA and a cap assembly 300 coupled to an opening of the can 200 to close the accommodating space S.

The can 200 may include the accommodating space S accommodating the cell assembly CA and at least one opening. Although the drawing illustrates that one opening is formed upwardly (in a Z-axis direction), the present disclosure is not limited thereto. The can 200 may include a metal material, such as stainless steel or aluminum to secure mechanical strength. The can 200 may be provided with the same material as that of the cap plate 310 described below, but the present disclosure is not limited thereto.

The cap assembly 300 may include at least one cap plate 310 and a terminal portion 350 arranged in the opening of the can 200.

The cap plate 310 may be disposed in the opening of the can 200 to close the opening of the can 200 and seal the accommodating space S. Here, 'sealing' the accommodating space S is not limited to sealing and may mean that the cap plate 310 closes the opening of the can 200. In other words, the cap plate 310 disposed in the opening of the can 200 may be considered to belong to the present disclosure.

The terminal portion 350 may include terminal units 351 and 355 electrically connecting an external power source to a current collecting assembly 500 to be described below. The terminal units 351 and 355 may include an electrode terminal 355 disposed on the cap plate 310 and at least partially exposed externally and a terminal pin 351 electrically connecting the electrode terminal 355 to the current collecting assembly 500. According to an embodiment, the electrode terminal 355 and the terminal pin 351 may include a material having electrical conductivity. Meanwhile, in the drawing, the electrode terminal 355 and the terminal pin 351 are illustrated as being separate components, but the present disclosure is not limited thereto, and the electrode terminal 355 and the terminal pin 351 may be formed integrally.

In addition, the terminal portion 350 may include insulating units 352, 354, and 356 preventing short circuits of the terminal units 351 and 355. The insulating units 352, 354, and 356 may include an electrically insulating material and may include a gasket 352 disposed between the terminal pin 351 and the cap plate 310, a first insulating portion 354 disposed between the current collecting assembly 500 and the cap plate 310, and a second insulating portion 356 disposed between the electrode terminal 355 and the cap plate 310. In the drawing, the insulating units 352, 354, and 356 are illustrated as separate components, but the present disclosure is not limited thereto, and the insulating units 352, 354, and 356 may be formed integrally.

The battery cell 10 of the present disclosure may further include the current collecting assembly 500 electrically connecting the terminal units 351 and 355 to the cell assembly CA. The current collecting assembly 500 may be disposed on at least one side of the cell assembly CA so as to face an electrode tab 120. Referring to FIG. 3 in advance, the current collecting assembly 500 is illustrated as being disposed on both sides of the cell assembly CA, but the present disclosure is not limited thereto. For example, the current collecting assembly 500 may be disposed on only one side of the cell assembly CA. As such, the present disclosure is not limited to the number of current collecting assemblies 500. The current collecting assembly 500 may include a first current collecting portion 510 electrically connected to the electrode tab 120 and a second current collecting portion 520 electrically connected to the terminal units 351 and 355. Specifically, the current collecting assembly 500 further includes the second current collecting portion 520 electrically connected to the first current collecting portion 510, and the second current collecting portion 520 may include a first plate 521 in contact with a first current collecting portion 510 and a second plate 522 bent from the first plate 521 in a predetermined direction.

In the drawing, the first current collecting portion 510 and the second current collecting portion 520 are illustrated as separate components, but the present disclosure is not limited thereto, and the first current collecting portion 510 and the second current collecting portion 520 may be formed integrally with each other. Meanwhile, a case including the first current collecting portion 510 may be considered to be included in the present disclosure, and the present disclosure is not limited to the presence or configuration of the second current collecting portion 520. A description of the current collecting assembly 500 will be provided below.

Referring to FIG. 3 in advance, the battery cell 10 according to an embodiment of the present disclosure includes the cell assembly CA including at least one electrode assembly 100 and the current collecting assembly 500 disposed on at least one side of the cell assembly CA and including the first current collecting portion 510 electrically connected to the electrode tab 120 of the electrode assembly 100, and the first current collecting portion 510 may be formed stepwise and contact the electrode tab 120 on a first surface (an inner surface) facing the cell assembly CA.

Here, the 'step shape' refers to a shape in which a portion of the first current collecting portion 510 protrudes inwardly or outwardly, such as the battery cell 10 of the first to third embodiments described below.

Hereinafter, battery cells according to various embodiments will be described with reference to the drawings. That is, the present disclosure may be provided in various embodiments according to a shape structure of the electrode assembly 100 or/and the current collecting assembly 500. The same descriptions between various embodiments will be omitted.

The battery cell 10 according to the first embodiment will be described with reference to the drawings.

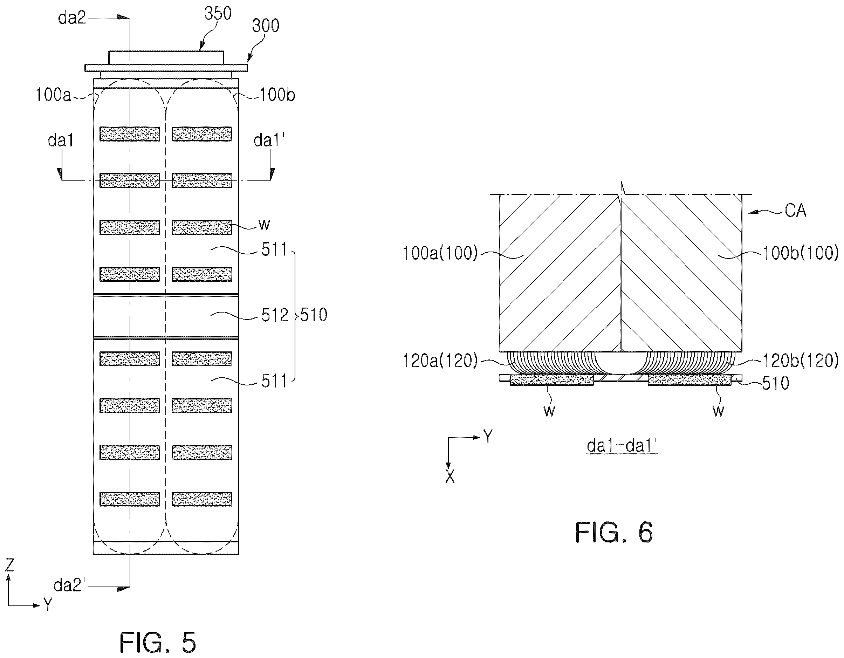

FIG. 3 is an exploded view of a battery cell according to the first embodiment of the present disclosure, FIG. 4 is a perspective view of an electrode assembly and a current collecting assembly according to the first embodiment of the present disclosure, and FIG. 5 is a diagram of a current collecting assembly according to the first embodiment of the present disclosure.

Referring to FIGS. 3 to 5 together, the battery cell 10 according to the first embodiment may include the cell assembly CA including at least one electrode assembly 100, the can 200 accommodating the cell assembly CA, the cap assembly 300 closing the can 200 and including the terminal portion 350, and the current collecting assembly 500 electrically connecting the cell assembly CA to the terminal portion 350. Hereinafter, the battery cell 10 according to the first embodiment will be described with reference to the drawings and the same descriptions as those given above with reference to FIGS. 1 and 2 will be omitted.

First, the battery cell 10 and the cell assembly CA of the present disclosure will be described. The battery cell 10 of the present disclosure may be a secondary battery. The battery cell 10 of the present disclosure may be a lithium ion battery, but is not limited thereto. For example, the battery cell 10 may be a nickel-cadmium battery, nickel-metal hydride battery, or nickel-hydrogen battery that may be charged and discharged. In addition, the battery cell 10 of the present disclosure may be configured as types according to the shape of the can 200 accommodating the electrode assembly 100. For example, the battery cell 10 of the present disclosure may include one of a pouch type, a prismatic type, or a cylindrical type. In the drawing, the can 200 is illustrated as a prismatic battery cell 10 formed in a square shape, but this is only an example, and the present disclosure is not limited to the type, shape, material, etc. of the can 200.

The cell assembly CA may include at least one electrode assembly 100. The electrode assembly 100 may be provided as a jelly roll type formed by winding in a predetermined direction, and may be provided in various manners, such as a stacking type, a zigzag (Z) folding type, a stack-folding type, etc. depending on a detailed stacking method. However, the electrode assembly 100 of the present disclosure is not limited thereto. In addition, the electrode assembly 100 may include the electrode tab 120. The electrode tab 120 may function as a passage through which current flows in the electrode assembly 100. In addition, as described below, the electrode tab 120 may be electrically connected to the current collecting assembly 500. For example, the electrode tab 120 may be welded to the current collecting assembly 500 by a method, such as laser welding. Through this, a welded portion w (see FIG. 4) may be formed on an outer surface of the current collecting assembly 500.

The electrode assembly 100 may be provided in a form in which a cathode and an anode are stacked with wide surfaces thereof facing each other, and a separator is interposed therebetween. That is, each of the cathodes and anodes may be provided in plural and arranged alternately, but may be stacked in a form in which a separator is interposed therebetween.

The separator may be formed between the cathode and the anode to prevent electrical short circuits between the cathode and the anode and to cause ion flow. For example, the separator may include a porous polymer film or a porous non-woven fabric.

The cathode may include a positive electrode current collecting plate and a positive electrode mixture layer disposed on at least one surface of the positive electrode current collecting plate. The positive electrode may include a positive electrode coated portion, which is a portion of the positive electrode current collecting plate in which the positive electrode mixture layer is disposed and a positive electrode uncoated portion, which is a portion of the positive electrode current collecting plate in which the positive electrode mixture layer is not disposed. Similarly, the negative electrode may include a negative electrode current collecting plate and a negative electrode mixture layer disposed on at least one surface of the negative electrode current collecting plate. The negative electrode may include a negative electrode coated portion, which is a portion of the negative electrode current collecting plate in which the negative electrode mixture layer is disposed and a negative electrode uncoated portion, which is a portion of the negative electrode current collecting plate in which the negative electrode mixture layer is not disposed. That is, in the present disclosure, the uncoated portion may refer to a region of the current collecting plate in which the mixture layer is not disposed, that is, a portion where the current collecting plate is exposed. A plurality of positive electrode uncoated portions or/and the negative electrode uncoated portions having the same polarity may gather to form the electrode tab 120 to be described below. For example, in the electrode tab 120, a plurality of positive electrode uncoated portions and/or a plurality of negative electrode uncoated portions may be ultrasonically welded to be coupled to each other. However, this is only an example, and the electrode tab 120 of the present disclosure is not limited thereto, and any electrode tab that functions as a current path of the electrode assembly 100 may be included.

Meanwhile, as described below, the cell assembly CA may include a plurality of electrode assemblies 100. In this case, the plurality of electrode assemblies 100 may be accommodated in the accommodating space S of the can 200 with their wide surfaces facing each other. Here, each of the plurality of electrode assemblies 100 may include the electrode tab 120. For example, the cell assembly CA may include a first electrode assembly 100a including a first electrode tab 120a and a second electrode assembly 100b including a second electrode tab 120b. However, this is for the convenience of understanding, and the cell assembly CA of the present disclosure is not limited to the number of electrode assemblies 100. That is, it should be understood that even a case in which at least one electrode assembly 100 is disposed belongs to the present disclosure.

In addition, the battery cell 10 of the present disclosure may further include an insulating plate 400 disposed between the current collecting assembly 500 and the can 200 to prevent electrical short circuits. The insulating plate 400 may include an electrically insulating material, such as mica, and may be disposed on at least one side of the cell assembly CA. Although the drawing illustrates that the insulating plate 400 is disposed on both sides of the cell assembly CA, the present disclosure is not limited to the presence or absence of the insulating plate 400 or the number of insulating plates.

As described above, referring back to FIG. 2, the current collecting assembly 500 of the present disclosure may include the first current collecting portion 510 electrically connected to the electrode tab 120 and the second current collecting portion 520 electrically connecting the first current collecting portion 510 to the terminal portion 350.

In addition, according to the present disclosure, the first current collecting portion 510 may include a contact portion 511 in contact with the electrode tab 120 and a connecting portion 512 disposed on an outer side, as compared to the contact portion 511. Specifically, first current collecting portion 510 may include a plurality of contact portions 511 contacting the electrode tab 120 and the connecting portion 512 disposed between the plurality of contact portions 511 and protruding outwardly, as compared to the contact portions 511. For example, the connecting portion 512 may extend in a first direction (a Y-axis direction) and the plurality of first contact portions 511a may be disposed to face each other in the second direction (the Z-axis direction), perpendicular to the first direction with the connecting portion 512 therebetween.

The contact portion 511 may be provided in plural and may be electrically connected to the electrode tab 120. The contact portion 511 may be in contact with and electrically connected to the electrode tab 120. For example, the contact portion 511 may be welded to the electrode tab 120 by a method, such as laser welding. Through this, the welded portion w may be formed on a surface of the contact portion 511. Specifically, according to an embodiment, the welded portion w formed by welding the electrode tab 120 and the contact portion 511 is further included, and the welded portion w may be disposed on an outer surface 511o (a second surface) opposite to an inner surface 511i of the contact portion 511. For example, the welded portion w may be a weld bead formed by welding the electrode tab 120 and the contact portion 511.

The connecting portion 512 may be disposed between a plurality of contact portions 511 to connect the adjacent contact portions 511 to each other. The connecting portion 512 may protrude to an outer side of the contact portion 511 and be provided in a step shape. Here, the term 'outer' may refer to a direction away from the cell assembly CA based on the cell assembly CA and may refer to an +X-axis direction in FIG. 4. Meanwhile, in the present disclosure, for the convenience of understanding, it is described that the connecting portion 512 is disposed to protrude to an outer side of the contact portion 511, but the present disclosure is not limited thereto. For example, the contact portion 511 may be disposed to protrude to an inner side of the connecting portion 512.

For example, as illustrated in the drawing, a plurality of contact portions 511 may be disposed to face each other in a height direction (the Z-axis direction) with the connecting portion 512 interposed therebetween. Here, the connecting portion 512 may extend in a thickness direction (the Y-axis direction) between the plurality of contact portions 511. As an example not illustrated, a plurality of contact portions 511 may be disposed to face each other in the thickness direction (the Y-axis direction) with the connecting portion 512 interposed therebetween. Here, the connecting portion 512 may extend in the height direction (the Z-axis direction) between the plurality of contact portions 511.

In this manner, the first current collecting portion 510 may be provided in steps to increase structural rigidity. Through this, distortion or deformation due to external impact, etc. may be minimized or prevented.

Hereinafter, the step structure of the first current collecting portion 510 will be described in more detail with reference to the drawings.

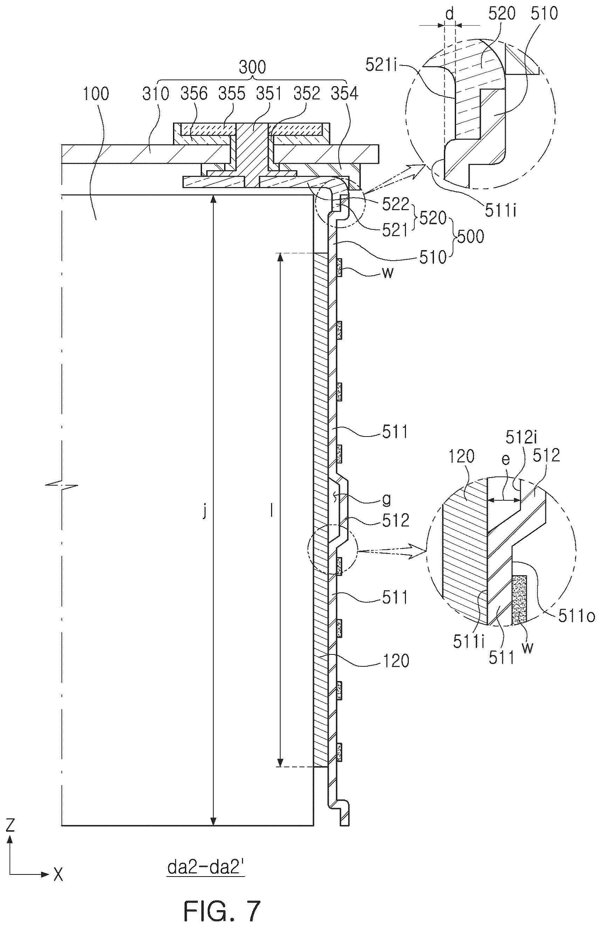

FIG. 6 is a cross-sectional view taken along line da1-da1' of FIG. 5, and FIG. 7 is a cross-sectional view taken along line da2-da2' of FIG. 5.

Referring to FIG. 6, a plurality of electrode tabs 120 may be coupled to the current collecting assembly 500. For example, referring to FIG. 5, the cell assembly CA may include a first electrode assembly 100a disposed on one side in the first direction and including a first electrode tab 120a and a second electrode assembly 100b disposed on the other side in the first direction and including a second electrode tab 120b. The first electrode tab 120a may be in contact with one side of the first current collecting portion 510 in the first direction (the Y-axis), and the second electrode tab 120b may be in contact with the other side in the first current collecting portion 510. The first electrode tab 120a may be welded to the first current collecting portion 510 at one side (a -Y-axis direction) of the first current collecting portion 510, and the second electrode tab 120b may be welded to the first current collecting portion 510 at the other side (a +Y-axis direction) of the first current collecting portion 510. However, the present disclosure is not limited thereto, and even a case in which only one electrode assembly 100 is provided may fall within the present disclosure.

Meanwhile, an inner surface (a first surface) of the first current collecting portion 510 and the electrode tab 120 may be in contact with each other. Here, the inner surface may refer to a surface facing the cell assembly CA. That is, the electrode tab 120 may be bent between a main body of the electrode assembly 100 and the first current collecting portion 510, so that one surface of the electrode tab 120 may be in contact with the inner surface of the first current collecting portion 510 and be welded. In addition, for example, the first electrode tab 120a and the second electrode tab 120b may be bent inwardly to each other. That is, the first electrode tab 120a may be bent toward the second electrode assembly 100b, and the second electrode tab 120b may be bent toward the first electrode assembly 100a. That is, the electrode tabs 120 of the plurality of electrode assemblies 100 may be bent inwardly to each other, and the opposite surfaces thereof may be in contact with and electrically connected the first current collecting portion 510.

Referring to FIG. 7, the second current collecting portion 520 of the present disclosure may be bent in an 'L' shape. The second current collecting portion 520 may include a first plate 521 connected to the first current collecting portion 510 and a second plate 522 bent from the first plate 521 and connected to the terminal portion 350.

According to an embodiment of the present disclosure, the first plate 521 may include an inner surface 521i (a first surface) facing the cell assembly CA, and the inner surface 511i (a first surface) of the contact portion 511, which is a surface in which the contact portion 511 contacts the electrode tab 120, may be disposed closer to the cell assembly CA than the inner surface 521i of the first plate 521. That is, the inner surface 511i of the contact portion 511 may be disposed closer to the electrode assembly 100 by a predetermined distance d than the inner surface 521i of the first plate 521.

In addition, as described above, the connecting portion 512 may be disposed on an outer side, as compared to the contact portion 511. Specifically, the inner surface 512i of the connecting portion 512 may be disposed in an outer direction (the +X-axis direction) by a predetermined protruding distance e than the inner surface 511i of the contact portion 511. That is, the inner surface 512i of the connecting portion 512 may be disposed farther from the electrode assembly 100 than the inner surface 511i of the contact portion 511. In other words, according to an embodiment, the connecting portion 512 may be spaced apart from the electrode assembly 100, and a heat dissipation space g for heat dissipation may be formed between the electrode assembly 100 and the connecting portion 512.

Through this, the first current collecting portion 510 may be provided stepwise through the structure of the contact portion 511 and the connecting portion 512 described above.

That is, through the structure of the connecting portion 512 protruding outwardly, the electrode assembly 100 and the first current collecting portion 510 are separated and a gap-shaped heat dissipation space g (see FIG. 7) may be formed. Heat generated in the first current collecting portion 510 may be rapidly discharged through the heat dissipation space g.

According to an embodiment, the protruding distance e may be greater than the distance d. However, the present disclosure is not limited thereto.

In addition, according to an embodiment, the height l of the electrode tab 120 of the present disclosure may account for 50% or more of a height j of the electrode assembly 100. Specifically, the length 1 of at least one of the first electrode tab 120a or the second electrode tab 120b in the second direction (Z-axis direction or height direction) may be 50% or more of the length j of the electrode assembly 100 in the second direction. This allows a large current to flow. For example, the height l of the electrode tab 120 may be 50% or more and 100% or less of the height j of the electrode assembly 100. However, the present disclosure is not limited thereto.

Hereinafter, a battery cell according to a second embodiment of the present disclosure will be described.

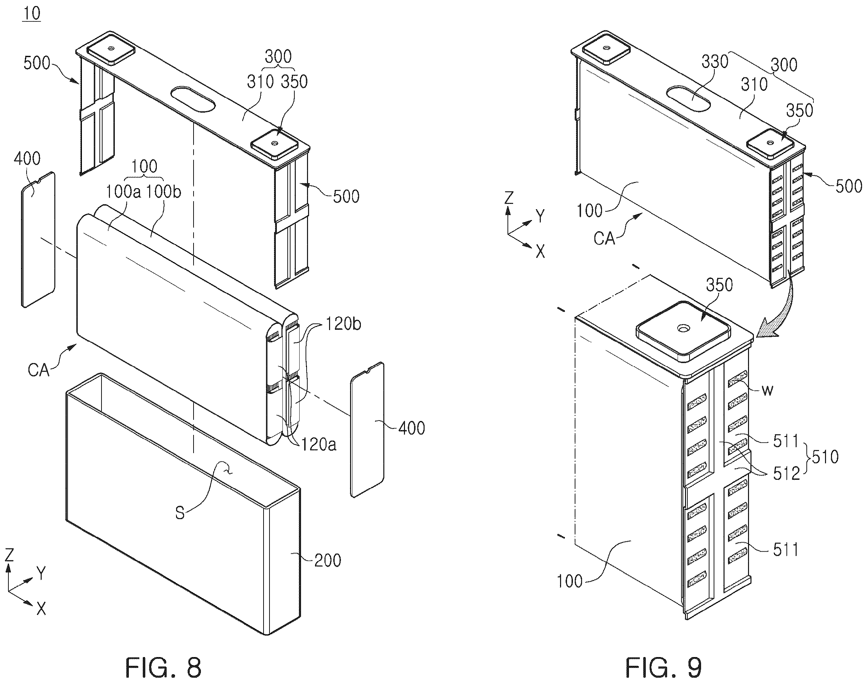

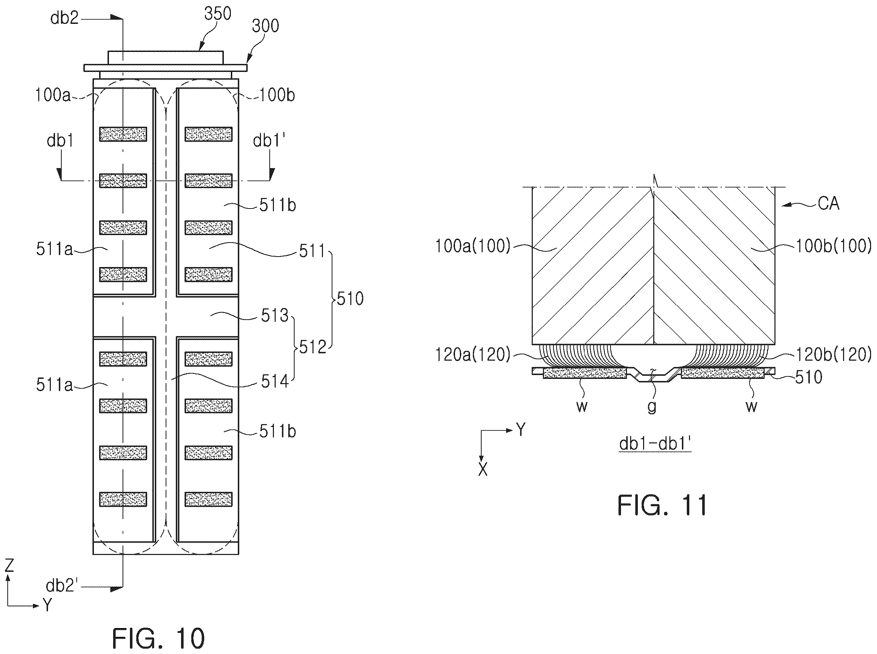

FIG. 8 is an exploded view of a battery cell according to the second embodiment of the present disclosure. FIG. 9 is a perspective view of an electrode assembly and a current collecting assembly according to the second embodiment of the present disclosure, and FIG. 10 is a diagram of a current collecting assembly according to the second embodiment of the present disclosure. The same descriptions as those given above with reference to FIGS. 1 to 7 will be omitted. The second embodiment may be mainly different from the first embodiment in the structure of the first current collecting portion 510.

According to the second embodiment, the connecting portion 512 may include a cross shape. The connecting portion 512 may include the connecting portion 512 protruding outwardly, as compared to the plurality of contact portions 511. The connecting portion 512 may include a first connecting portion 513 extending in the first direction (the Y-axis direction) and a second connecting portion 514 extending in the second direction (the Z-axis direction).

In addition, according to the second embodiment, a plurality of electrode tabs 120 protruding from one electrode assembly 100 (so-called 'multi-tab structure') in the same direction may be provided. For example, referring to FIG. 8, two first electrode tabs 120a and two second electrode tabs 120b may be provided. In addition, referring to FIG. 10, the contact portion 511 may include a first contact portion 511a connected to the first electrode tab 120a and a second contact portion 511b connected to the second electrode tab 120b. The first contact portion 511a may be disposed to face the first electrode assembly 100a, and the second contact portion 511b may be disposed to face the second electrode assembly 100b.

Here, the first connecting portion 513 may be disposed to extend in the first direction (the Y-axis direction) between the plurality of first electrode tabs 120a and between the plurality of second electrode tabs 120b. In addition, the second connecting portion 514 may extend in the second direction (the Z-axis direction) between the first contact portion 511a and the second contact portion 511b. The first connecting portion 513 may support the first current collecting portion 510 to be deformed in the first direction (the Y-axis direction), and the second connecting portion 514 may support the second current collecting portion 520 to be deformed in the second direction (Z-axis direction).

However, the present disclosure is not limited to the number of electrode assemblies 100 or the number of electrode tabs 120 per electrode assembly 100. In an embodiment not illustrated, one electrode tab 120 may be provided for each electrode assembly 100, and three or more may also be provided. For example, when three electrode assemblies 100 are provided, the contact portion 511 may include first, second, and third contact portions facing each electrode assembly, and two second connecting portions 514 may be provided to be disposed between the first, second, and third contact portions. As another example, when three electrode tabs 120 are provided for each electrode assembly 100, two first connecting portions 513 may be provided to be disposed between the plurality of electrode tabs 120.

That is, the number and shape of the electrode tabs 120 in the drawing are for convenience of understanding, and the second embodiment may be included in the present disclosure if it includes the second connecting portion 514 in a cross shape.

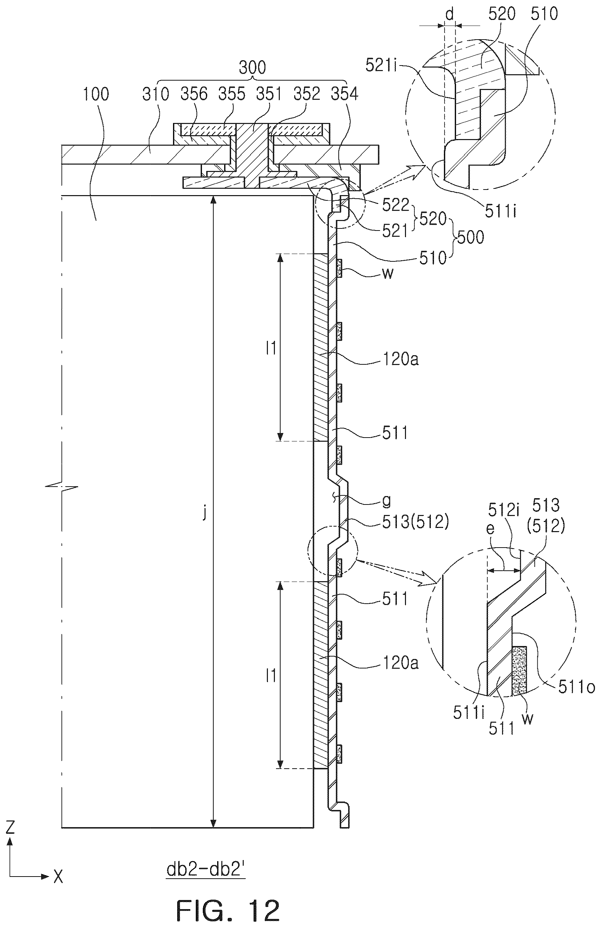

FIG. 11 is a cross-sectional view taken along line db1-db1' of FIG. 10, and FIG. 12 is a cross-sectional view taken along line db2-db2' of FIG. 10.

Referring to FIG. 11, as described above with reference to FIG. 6, the first electrode tab 120a and the second electrode tab 120b may be provided to be bent toward each other. In addition, the electrode tab 120 may be welded in contact with the inner surface of the first current collecting portion 510 to form the welded portion w. In addition, the second connecting portion 514 may protrude to the outer side, as compared to the contact portion 511, to form the heat dissipation space g. The details thereof are described above with reference to FIG. 6, and thus are omitted.

Referring to FIG. 12, as described above with reference to FIG. 7, the inner surface 511i of the contact portion 511 may be disposed inwardly by the predetermined distance d from the inner surface 521i of the first plate 521. In addition, the inner surface 512i of the connecting portion 512 may be disposed outwardly by the predetermined protruding distance e from the inner surface 511i of the contact portion 511. Through this, the heat dissipation space g through which heat may be dissipated may be formed between the electrode assembly 100 and the current collecting assembly 500. Details thereof are described above with reference to FIG. 7, and thus are omitted.

In addition, the height 11 of the first electrode tab 120a or the height of the second electrode tab 120b may be provided to be 25% or more and 50% or less of the height j of the electrode assembly 100. In this manner, the height of the electrode tab 120 is provided to account for a considerable portion, so that a large-capacity power structure may be provided.

In this manner, the second embodiment may effectively prevent the first current collecting portion 510 from being deformed by forming the connecting portion 512 in a cross shape. In addition, the heat dissipation space g may also be formed in a cross shape so that heat may be rapidly discharged.

Hereinafter, a battery cell according to a third embodiment will be described with reference to the drawings.

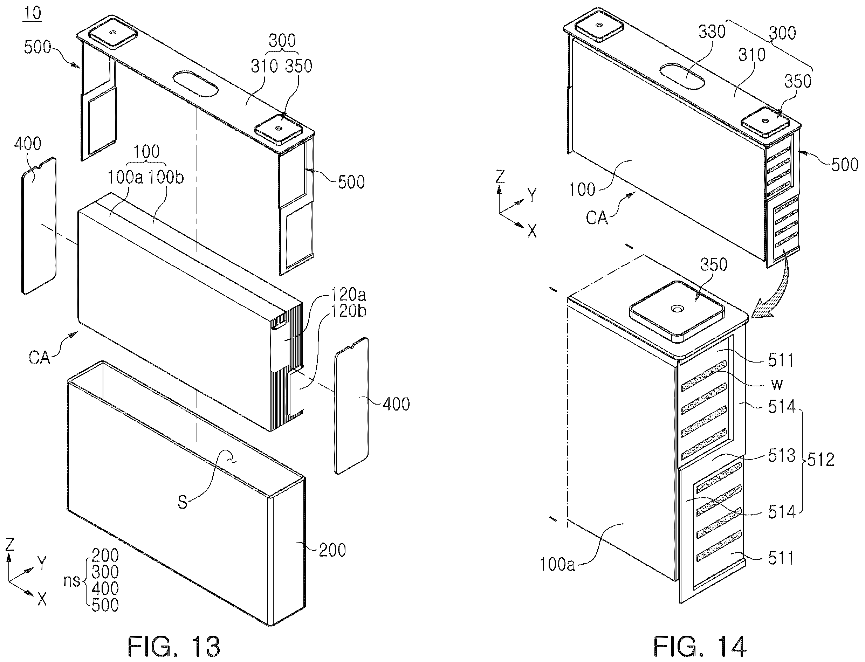

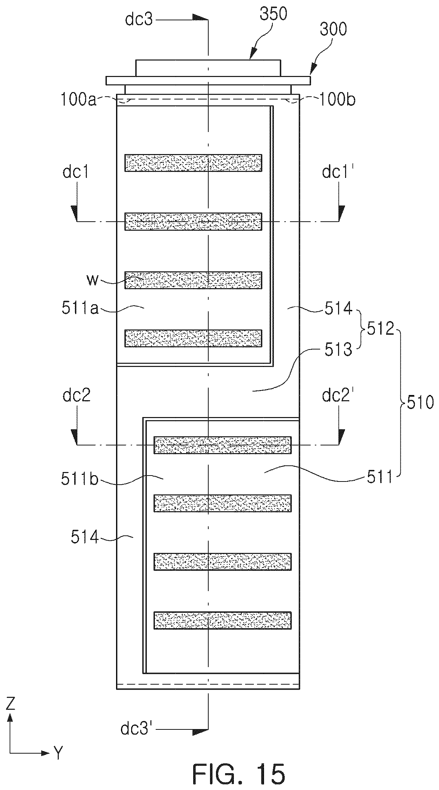

FIG. 13 is an exploded view of a battery cell according to the third embodiment of the present disclosure, FIG. 14 is a perspective view of an electrode assembly and a current collecting assembly according to the third embodiment of the present disclosure, and FIG. 15 is a diagram of a current collecting assembly according to the third embodiment of the present disclosure. The same descriptions as those given above with reference to FIGS. 1 to 12 will be omitted. The third embodiment may be mainly different from the first and second embodiments in the structure of the first current collecting portion 510.

According to the third embodiment, the connecting portion 512 may include at least one of an L-shape and a Z-shape. Specifically, the connecting portion 512 may include the first connecting portion 513 extending in the first direction (the thickness direction or Y-axis direction) and the second connecting portion 514 extending in the second direction (the height direction or Z-axis direction) from at least one side of the first connecting portion 513. Specifically, according to the third embodiment, the connecting portion 512 may include at least one of an L-shape and a Z-shape. Specifically, unlike the drawing, the L-shape may be a shape in which at least one second connecting portion 514 extends in the same direction (the +Z-axis or -Z-axis). The Z-shape may be a shape in which a plurality of second connecting portions 514 extend in opposite directions (the +Z-axis and -Z-axis) as illustrated in the drawing. In addition, although not illustrated in the drawing, the connecting portion 512 may be provided in an H shape. Unlike the drawing, the H shape may be a shape in which a plurality of second connecting portions 514 extend in opposite directions (the +Z axis and -Z axis) from both sides of the first connecting portion 513. In this sense, the Z shape and the H shape may be concepts included in the L shape. That is, a case in which the second connecting portion 514 extends from at least one end of the first connecting portion 513 may be included in the third embodiment.

More specifically, the connecting portion 512 may include the first connecting portion 513 extending in the first direction (the Y-axis direction) and the second connecting portion 514 extending in the second directions (the Z-axis direction) from at least one side of the first connecting portion 513.

For example, the first connecting portion 513 may extend in the first direction (the Y-axis direction) between the plurality of contact portions 511. The second connecting portion 514 may be disposed at an edge of the contact portion 511. The first connecting portion 513 may be disposed between the plurality of contact portions 511 and may extend in the thickness direction (the Y-axis direction), and the second connecting portion 514 may extend in the height direction (the Z-axis direction) from at least one side of the first connecting portion 513. As another example, the first connecting portion 513 may extend in the first direction, and the second connecting portion 514 may extend in the second direction from at least one end of the first connecting portion 513. Through this structure, the first connecting portion 513 may prevent the first current collecting portion 510 from being deformed in the first direction (the thickness direction or Y-axis direction), and the second connecting portion 514 may prevent the first current collecting portion 510 from being deformed in the second direction (the height direction or Z-axis direction).

According to an embodiment, the electrode tab 120a of the first electrode assembly 100a and the electrode tab 120b of the second electrode assembly 100b may be disposed so as not to overlap each other (to be misaligned) in the first direction (the Y-axis direction). For example, the first electrode tab 120a may be disposed on one side in the second direction (the Z-axis direction), perpendicular to the first direction (the Y-axis direction), and the second electrode tab 120 may be disposed on the other side in the second direction (the Z-axis direction). The contact portion 511 may include the first contact portion 511a contacting the first electrode tab 120a and the second contact portion 511b contacting the second electrode tab 120b. The first connecting portion 513 may extend in the first direction (the Y-axis direction) between the first contact portion 511a and the second contact portion 511b, and the second connecting portion 514 may extend in the second direction (the Z-axis direction) from at least one side of the first connecting portion 513 or one side of the contact portion 511. However, the battery cell 10 according to the second embodiment is not limited thereto, and a case including the first connecting portion 513 extending in the first direction and the second connecting portion 514 extending in the second direction from at least one side of the first connecting portion 513 may be included in the present disclosure.

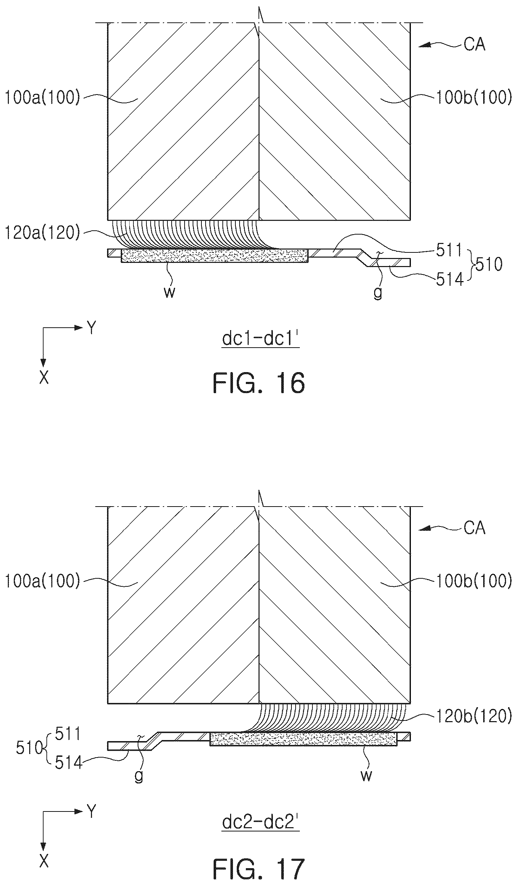

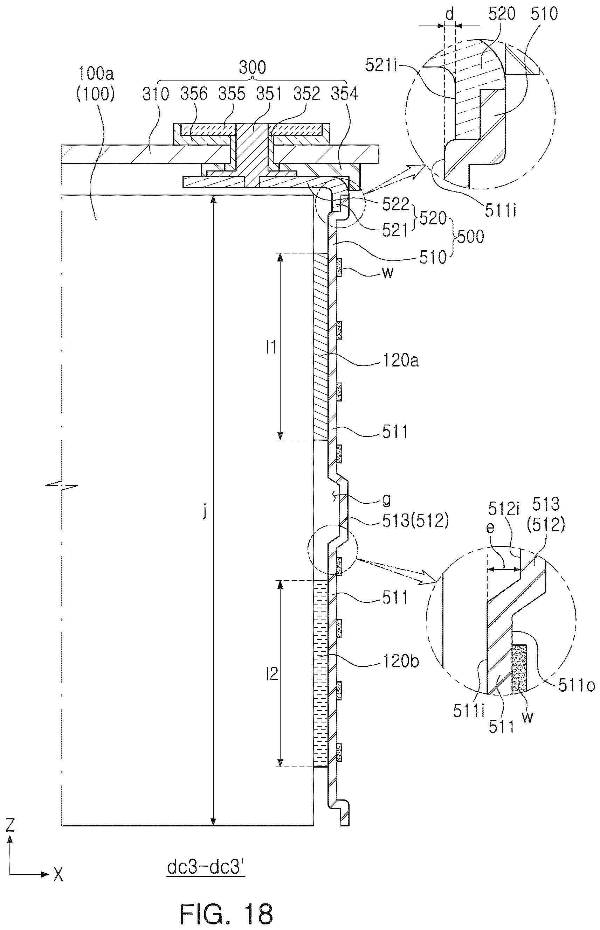

FIG. 16 is a cross-sectional view taken along line dc1-dc1' of FIG. 15, FIG. 17 is a cross-sectional view taken along line dc2-dc2' of FIG. 15, and FIG. 18 is a cross-sectional view taken along line dc3-dc3' of FIG. 15.

Referring to FIG. 16, the first electrode tab 120a may be bent toward the second electrode assembly 100b to contact and be welded with the inner surface of the first contact portion 511a. Referring to FIG. 17, the second electrode tab 120b may be bent toward the first electrode assembly 100a to contact and be welded with the inner surface of the second contact portion 511b. Details thereof have been described above with reference to FIGS. 6 and 11, and thus are omitted.

Referring to FIG. 18, the inner surface 511i of the contact portion 511 may be disposed inwardly by the predetermined distance d from the inner surface 521i of the first plate 521. In addition, the inner surface 512i of the connecting portion 512 may be disposed outwardly by the predetermined protruding distance e from the inner surface 511i of the contact portion 511. Through this, the heat dissipation space g through which heat may be dissipated may be formed between the electrode assembly 100 and the current collecting assembly 500. Details thereof have been described above with reference to FIG. 7, and thus are omitted.

In addition, at least one of the height 11 of the first electrode tab 120a or the height 12 of the second electrode tab 120b may be provided to be 25% or more and 50% or less of the height j of the electrode assembly 100. Specifically, the length of at least one of the first electrode tab 120a or the second electrode tab 120b in the second direction (the Z-axis direction or height direction) may be 25% or more to 50% or less of the length of the electrode assembly 100 in the second direction. In this manner, the height of the electrode tab 120 is provided to account for a significant portion, thereby providing a large-capacity power structure.

Hereinafter, a battery module of the present disclosure will be described with reference to the drawings.

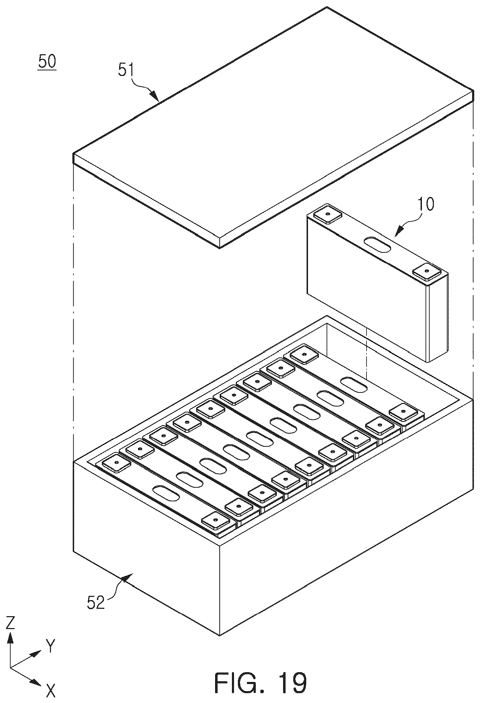

FIG. 19 is an exploded view of a battery module according to an embodiment of the present disclosure. The same descriptions as those given above with reference to FIGS. 1 to 18 will be omitted.

Referring to FIG. 19, a battery module 50 of the present disclosure may include at least one battery cell 10.

The battery module 50 may include at least one battery cell 10 and module cases 51 and 52 accommodating the at least one battery cell 10.

Here, the battery cell 10 may be the battery cell 10 described above with reference to FIGS. 1 to 18. The battery cell 10 has been described above, and thus a description thereof is omitted.

The module cases 51 and 52 may include a lower cover 52 accommodating at least one battery cell 10 and an upper cover 51 covering the lower cover. In addition, the battery module 50 may further include a module terminal (not illustrated) electrically connecting the battery cell 10 and an external power source to each other.

Meanwhile, the battery module 50 described in the present disclosure may all be included in the present disclosure if it includes the battery cell 10. That is, the battery module 50 described in the present disclosure should be interpreted as a power source including a battery module including the battery cell 10, a battery pack, an energy storage system (ESS), etc.

The battery cell and the battery module including the same according to an embodiment of the present disclosure may increase the structural rigidity of the current collecting portion.

The battery cell and the battery module including the same according to an embodiment of the present disclosure may minimize or prevent deformation of the current collecting portion.

The battery cell and the battery module including the same according to an embodiment of the present disclosure may rapidly dissipate heat generated by the current collecting portion.

(Aspect 1) a battery cell includes: a cell assembly including at least one electrode assembly; and a current collecting assembly disposed on at least one side of the cell assembly and including a first current collecting portion electrically connected to an electrode tab of the electrode assembly, wherein the first current collecting portion is formed stepwise and contacts the electrode tab on a first surface facing the cell assembly.

(Aspect 2) The battery cell of aspect 1, the first current collecting portion may include: a plurality of contact portions contacting the electrode tab; and a connecting portion disposed between the plurality of contact portions and protruding outwardly, as compared to the contact portions.

(Aspect 3) The battery cell of aspect 2, the connecting portion may be spaced apart from the electrode assembly, and a gap (a heat dissipation space) for heat dissipation may be formed between the electrode assembly and the connecting portion.

(Aspect 4) The battery cell of any one of aspects 2 to 3, the current collecting assembly may further include a second current collecting portion electrically connected to the first current collecting portion, and the second current collecting portion may include: a first plate connected to the first current collecting portion; and a second plate bent from the first plate in a predetermined direction.

(Aspect 5) The battery cell of aspect 4, the first plate may include a first surface facing the cell assembly, and a first surface of the contact portion, which may be a surface in which the contact portion contacts the electrode tab, may be disposed closer to the cell assembly than the first surface of the first plate.

(Aspect 6) The battery cell of any one of aspects 1 to 5, the battery cell may further include: a welded portion formed by welding the electrode tab and the first current collecting portion, wherein the welded portion may be disposed on a second surface opposite to the first surface of the first current collecting portion.

(Aspect 7) The battery cell of any one of aspects 2 to 5, the connecting portion may extend in a first direction, and the plurality of contact portions may be arranged to face each other in a second direction, perpendicular to the first direction, with the connecting portion interposed therebetween.

(Aspect 8) The battery cell of aspect 7, the electrode assembly may include a first electrode assembly disposed on one side in the first direction and having a first electrode tab and a second electrode assembly disposed on the other side in the first direction and having a second electrode tab, the first electrode tab may be bent toward the second electrode assembly, and the second electrode tab may be bent toward the first electrode assembly.

(Aspect 9) The battery cell of aspect 8, the first electrode tab may be in contact with one side of the first current collecting portion in the first direction, and the second electrode tab may be in contact with the other side in the first current collecting portion.

(Aspect 10) The battery cell of any one of aspects 8 to 9, a length of at least one of the first electrode tab or the second electrode tab in a second direction may be 50% or more of a length of the electrode assembly in the second direction.

(Aspect 11) The battery cell of any one of aspects 2 to 5, The connecting portion may include a cross-shape.

(Aspect 12) The battery cell of aspect 11, The connecting portion may include a first connecting portion extending in a first direction and a second connecting portion extending in a second direction, perpendicular to the first direction.

(Aspect 13) The battery cell of aspect 12, the electrode assembly may include: a first electrode assembly disposed on one side in the first direction and including a plurality of first electrode tabs; and a second electrode assembly disposed on the other side in the first direction and including a plurality of second electrode tabs, and the contact portion may include a first contact portion contacting the plurality of first electrode tabs and a second contact portion contacting the plurality of second electrode tabs.

(Aspect 14) The battery cell of aspect 13, the first connecting portion may extend in the first direction between the plurality of first electrode tabs and the plurality of second electrode tabs, and the second connecting portion may extend in the second direction between the first contact portion and the second contact portion.

(Aspect 15) The battery cell of any one of aspects 2 to 5, The connecting portion may include at least one of an L-shape or a Z-shape.

## Claims

1. A battery cell comprising:
a cell assembly including at least one electrode assembly; and
a current collecting assembly disposed on at least one side of the cell assembly and including a first current collecting portion electrically connected to an electrode tab of the electrode assembly,
wherein the first current collecting portion is formed stepwise and contacts the electrode tab on a first surface facing the cell assembly.

2. The battery cell of claim 1, wherein
the first current collecting portion includes:
a plurality of contact portions contacting the electrode tab; and
a connecting portion disposed between the plurality of contact portions and protruding outwardly, as compared to the contact portions.

3. The battery cell of claim 2, wherein the connecting portion is spaced apart from the electrode assembly, and a gap (a heat dissipation space) for heat dissipation is formed between the electrode assembly and the connecting portion.

4. The battery cell of any one of claims 2 to 3, wherein
the current collecting assembly further includes a second current collecting portion electrically connected to the first current collecting portion, and
the second current collecting portion includes:
a first plate connected to the first current collecting portion; and
a second plate bent from the first plate in a predetermined direction.

5. The battery cell of claim 4, wherein the first plate includes a first surface facing the cell assembly, and a first surface of the contact portion, which is a surface in which the contact portion contacts the electrode tab, is disposed closer to the cell assembly than the first surface of the first plate.

6. The battery cell of any one of claims 1 to 5, further comprising:
a welded portion formed by welding the electrode tab and the first current collecting portion,
wherein the welded portion is disposed on a second surface opposite to the first surface of the first current collecting portion.

7. The battery cell of any one of claims 2 to 5, wherein
the connecting portion extends in a first direction, and
the plurality of contact portions are arranged to face each other in a second direction, perpendicular to the first direction, with the connecting portion interposed therebetween.

8. The battery cell of claim 7, wherein
the electrode assembly includes a first electrode assembly disposed on one side in the first direction and having a first electrode tab and a second electrode assembly disposed on the other side in the first direction and having a second electrode tab,
the first electrode tab is bent toward the second electrode assembly, and the second electrode tab is bent toward the first electrode assembly.

9. The battery cell of claim 8, wherein the first electrode tab is in contact with one side of the first current collecting portion in the first direction, and the second electrode tab is in contact with the other side in the first current collecting portion.

10. The battery cell of any one of claims 8 to 9, wherein a length of at least one of the first electrode tab or the second electrode tab in a second direction is 50% or more of a length of the electrode assembly in the second direction.

11. The battery cell of any one of claims 2 to 5, wherein the connecting portion includes a cross-shape.

12. The battery cell of claim 11, wherein the connecting portion includes a first connecting portion extending in a first direction and a second connecting portion extending in a second direction, perpendicular to the first direction.

13. The battery cell of claim 12, wherein
the electrode assembly includes:
a first electrode assembly disposed on one side in the first direction and including a plurality of first electrode tabs; and
a second electrode assembly disposed on the other side in the first direction and including a plurality of second electrode tabs, and
the contact portion includes a first contact portion contacting the plurality of first electrode tabs and a second contact portion contacting the plurality of second electrode tabs.

14. The battery cell of claim 13, wherein the first connecting portion extends in the first direction between the plurality of first electrode tabs and the plurality of second electrode tabs, and the second connecting portion extends in the second direction between the first contact portion and the second contact portion.

15. The battery cell of any one of claims 2 to 5, wherein the connecting portion includes at least one of an L-shape or a Z-shape.
